# EUROPÄISCHE PATENTSCHRIFT

(11) **EP 1 327 538 B1**
(45) Veröffentlichungstag und Bekanntmachung des Hinweises auf die Patenterteilung: **27.02.2008**
(21) Anmeldenummer: 02027225.8
(22) Anmeldetag: 06.12.2002
(51) Int. Cl.: B60G 11/27, B60G 17/052

(54) **Luftfeder mit integriertem Steuerventil**
Airspring with an integrated control valve
Ressort pneumatique avec une vanne de control intégrée

(30) Priorität: 09.01.2002 DE 10200553
(43) Veröffentlichungstag der Anmeldung: 16.07.2003
(73) Patentinhaber: ZF Sachs AG, 97424 Schweinfurt (DE)
(72) Erfinder: Gross, Alexander, 97653 Bischofsheim (DE); Jolibert, Christophe, 77420 Champs sur Marne (FR)

(56) Entgegenhaltungen:
- EP-A1- 0 256 897
- EP-A1- 0 311 465
- US-A- 4 778 156
- US-A- 5 649 692
- US-B1- 6 332 624

## Beschreibung

Die Erfindung betrifft eine Luftfeder entsprechend dem Oberbegriff von Patentanspruch 1.

Die DE 100 03 045 A1 beschreibt eine Luftfeder mit einem integrierten Steuerventil, wobei das Steuerventil von einem Steuerelement betätigt wird, dessen Wirklänge kürzer ist als die Hublänge der Luftfeder. Dazu ist das Steuerelement axial schwimmend gelagert und wird von einem Federelement vorgespannt, so dass das Steuerelement der Hubbewegung des Außenrohres folgt, bis ein Anschlag die weitere Steuerbewegung des Steuerelements begrenzt, wobei das Außenrohr eine Wirkverbindung zum Steuerelement löst.

Der Kontakt des Anschlags des Steuerelements mit dem Abrollrohr oder einem dieser Baugruppe verbundenen Bauteil ist in Abhängigkeit der Ausfederungsgeschwindigkeit des Steuerelements hörbar und kann als störend empfunden werden. Ein ähnlicher Effekt kann auftreten, wenn die Luftfeder aus einem Ausfederungszustand die angestrebte Niveaulage erreicht und das Außenrohr wieder die Wirkverbindung mit dem Steuerelement herstellt.

Bei der Basiskonstruktion gemäß der DE 44 09 252 tritt dieses Problem nicht auf, da das Steuerelement mit dem Abrollrohr fest verbunden ist und folglich niemals eine Relativbewegung zwischen diesen beiden Bauteilen Geräusche verursachen kann.

Aufgabe der vorliegenden Erfindung ist es, die aus dem Stand der Technik bekannten Geräuschprobleme bei einer Luftfeder zu minimieren

Erfindungsgemäß wird die Aufgabe dadurch gelöst, dass eine zweite Feder, deren Kraftrichtung gegen die erste Feder wirksam ist, die Stellung des Steuerelements mitbestimmt.

Der große Vorteil der Erfindung besteht darin, dass das Steuerelement von den Federkräften beider Federn in den Extremlagen gehalten wird, ohne dass ein fester Anschlag notwendig ist. Die Federn unterbinden prinzipbedingt jedes Geräusch, so dass es für Außenstehende akustisch nicht wahrnehmbar ist, wenn die Federn das Steuerelement in einem Gleichgewichtszustand halten.

In weiterer konstruktiver Ausgestaltung stützt sich die zweite Feder an der Baugruppe Außenrohr ab. Bei dieser Variante besteht zwischen der Baugruppe Abrollrohr und dem Steuerelement ein permanenter Kontakt, so dass zwangsläufig auch keine Kontaktgeräusche auftreten können.

Dazu ist es sinnvoll, dass die zweite Feder zumindest ab einer definierten Niveaulage in Einfederungsrichtung der Luftfeder eine größere Federkraft aufweist als die erste Feder. Ausgehend von der maximalen Ausfederungslage bis zur Niveaulage ist es ausreichend, wenn die zweite Feder eine gleichgroße Kraftaufweist, wie die erste Feder. Es besteht zwar eine gefederte Verbindung zwischen der Baugruppe Abrollrohr und dem Steuerelement, aber durch die steifere zweite Feder wird die Übertragung der Änderungen des Hubwegs der Luftfeder fehlerfrei auf das Steuerelement gewährleistet.

So kann die zweite Feder von einem Elastomer gebildet werden.

Alternativ besteht auch die Möglichkeit dass eine Schraubenfeder verwendet wird, wobei dann vorteilhafterweise das Steuerelement mit einem Federteller für die zweite Feder ausgeführt ist.

Bei dieser Variante kann ein besonders kurzbauendes Steuerelement eingesetzt werden, da man das Steuerelement schon eine Endposition einnehmen lassen kann, beispielsweise bei einer Einfederungsbewegung des Außenrohres, aber durch die zweite Feder eine weitere Relativbewegung der Baugruppe Außenrohr in Richtung des Steuerelementes zulassen kann, da dieser Weg von der zweiten Feder ausgeglichen wird. Für die Funktion des Steuerventils ist es unerheblich, ob die Luftfeder geringfügig oder sehr weit von einer vorgegebenen Niveaulage aus- oder eingefedert ist. Es wird unabhängig vom Absolutweg jeweils Druckluft zuoder abgeführt.

Zur Vermeidung eines Anschlaggeräusches bei Erreichen einer Endstellung des Steuerelementes bezogen auf die Baugruppe Abrollrohr ist funktional zwischen dem Steuerelement und der Baugruppe Abrollrohr ein elastischer Anschlag angeordnet ist.

Bei einer Alternativvariante ist dass ein Zughaltemittel eine Endstellung des Steuerelements gegen die Federkraft der ersten Feder bestimmt.

Vorteilhafterweise ist das Zughaltemittel als eine zweite Feder in der Bauform einer Zugfeder ausgeführt, die an der Baugruppe Abrollrohr angreift.

Des weiteren ist funktional zwischen einer Kontaktfläche der Baugruppe Abrollrohr und einer Kontaktfläche des Steuerelements eine Anschlagdämpfelement angeordnet.

Im Hinblick auf einen möglichst einfachen Montageablauf weist das Steuerelement einen Axialanschlag auf, der eine Montageendstellung des Steuerelements bestimmt.
In dem Zusammenhang sind die Federrate und der Federweg der zweiten Feder derart abgestimmt, dass im Endmontagezustand der Luftfeder unabhängig von der momentanen Hublage der Axialanschlag außer Eingriff bleibt.

Anhand der folgenden Figurenbeschreibung soll die Erfindung näher erläutert werden:

Es zeigt:
- Fig. 1: Anwendungsbeispiel der Erfindung
- Fig. 2: Erste Ausführungsvariante
- Fig. 3: Alternatives Steuerventil
- Fig. 4 -7: Weitere Ausführungsvariante

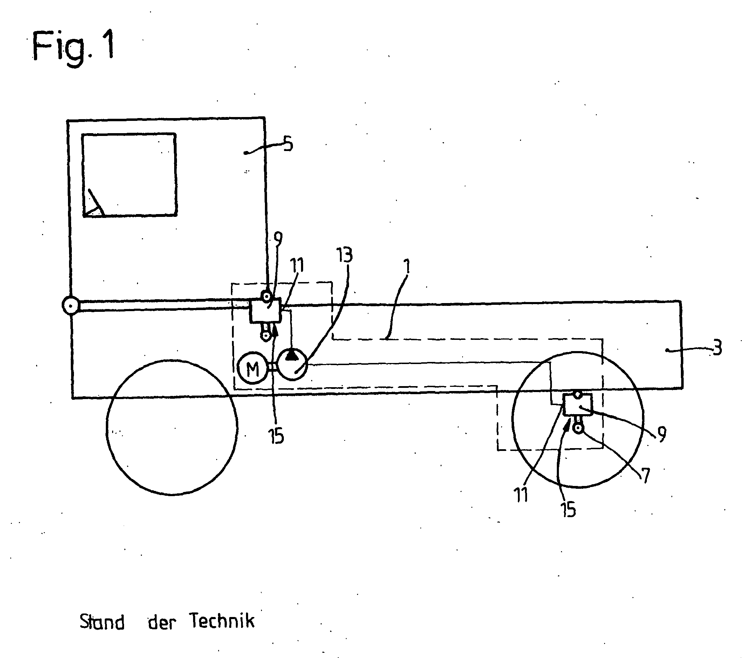

Die Fig. 1 zeigt eine Einbausituation für eine Luftfederungsanlage 1 zwischen einem Fahrgestell 3 und einer relativ zum Fahrgestell 3 schwingend gelagerten Fahrzeugkomponente, wie ein Fahrerhaus 5 oder eine Fahrzeugachse 7. Dabei ist mindestens eine Luftfeder 9 über einen Versorgungsanschluss 11 mit einer Druckquelle 13 verbunden, wobei ein Steuerventil 15 als Teil der Luftfeder 9 zwischengeschaltet ist. Die Versorgung erfolgt mittels eines Kompressoraggregates.

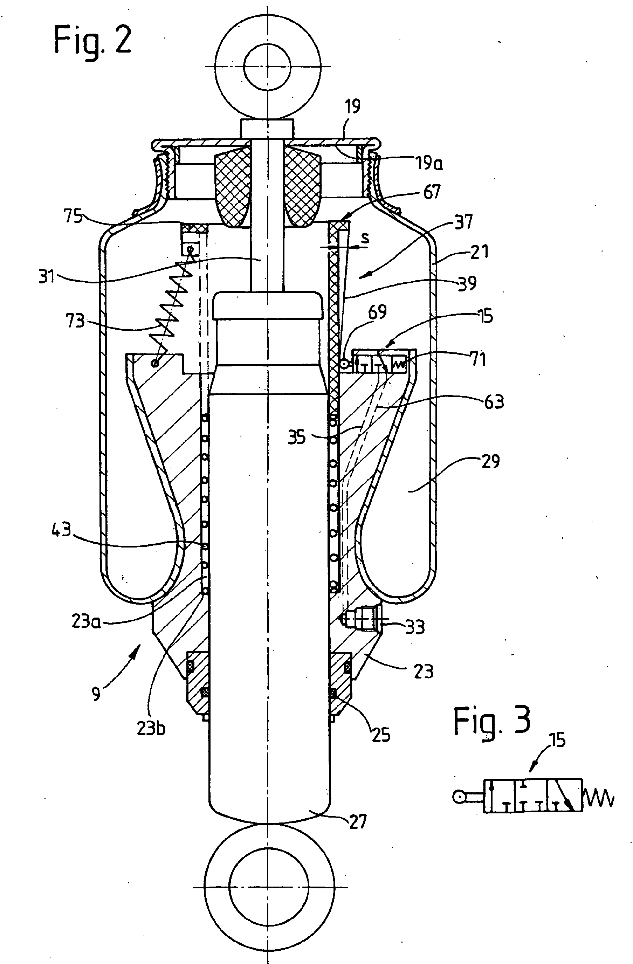

Die Fig. 2 beschränkt sich in ihrer Darstellung auf die Luftfeder 9. Diese Luftfeder 9 weist ein Außenrohr 19 auf, auf welchem das eine Ende eines Federbalges 21 befestigt ist, während das andere Ende des Federbalges 21 auf einem Abrollrohr 23 eingespannt ist. Das Abrollrohr 23 ist durch Dichtungen 25 gegenüber einem Behälterrohr 27 abgedichtet. Ein unter Druck stehender Federraum 29 wird von dem Federbalg 21 und dem Außenrohr 19 begrenzt.

Eine Kolbenstange 31, die zusammen mit dem Behälterrohr 27 Bestandteil eines Schwingungsdämpfers ist, steht in Wirkverbindung mit dem Außenrohr 19. Die Luftfeder 9 besteht damit aus zwei zueinander beweglichen Luftfederbaugruppen. Eine erste Luftfederbaugruppe umfasst das Außenrohr mit der Kolbenstange und ggf. Anbauteilen, wie einem Anschlagpuffer. Zu einer zweiten Luftfederbaugruppe gehört das Abrollrohr 23 und das Behälterrohr 27, sowie den an diesen genannten Komponenten befestigten Teilen.

Innerhalb des Abrollrohres 23 ist ein Versorgungsanschluss 33 angeordnet, der in eine Druckluftzuführleitung 35 für das Steuerventil 15 übergeht. Dabei mündet die Druckluftzuführleitung 35 im Federraum. Am Ausgang der Druckluftzuführleitung 35 in den Federraum 29 ist das Steuerventils 15 angeordnet, das die Druckluftzufuhr beeinflusst.

Das Steuerventil 15 ist als Schaltbild beispielhaft als 3/2- Wegeventil dargestellt. Man kann sich sicherlich auch eine Steuerventil vorstellen, bei dem eine Schaltstellung mit gleichzeitig blockierter Abführ- und Druckluftzufuhrleitung 35; 63 ausgeführt ist, die im Bereich der Normallage des Hubweges der Luftfeder eingenommen wird. Wie die Figur 3 zeigt, kann alternativ sinnvollerweise auch ein 3/3 Wegeventil eingesetzt werden.

Innerhalb eines Ringraums 23a des Abrollrohres 23 ist ein Steuerelement 37 angeordnet, das ein Übertragungsglied 69 betätigt, das wiederum verschiedene Schaltstellungen des Steuerventils 15 bestimmt. Das Steuerelement kann stabförmig oder auch, wie gestrichelt dargestellt, als Zylinder ausgeführt sein und ist in Längsrichtung schwimmend zum Abrollrohr gelagert, wobei es sich auf einer ersten Federelement 43 abstützt, die wiederum auf einer Abstützfläche 23b des Abrollrohres anliegt. Des weiteren greift an dem Steuerelement 37 als ein Zughaltemittel eine zweite Feder 73 in der Bauform einer Zugfeder an, deren anderes Ende am Abrollrohr oder einem ortsfesten Bauteil dieser Baugruppe befestigt ist. In der dargestellten Figur befindet sich die Luftfeder momentan in einer Hublage, die größer ist als eine definierte Niveaulage. Dabei besteht ein Abstand zwischen einer Kontaktfläche 67 des Steuerelements und einer Kontaktfläche 19a der Baugruppe Außenrohr 19. Die Kontaktfläche 67 des Steuerelements wird von einem Anschlagdämpfelement 75 gebildet. Der Abstand wird von den Kräften der beiden gegeneinander wirksamen Federkräften der Federn 43; 73 bestimmt, wobei die. Federkraft der ersten Feder 43 ausgehend von der maximalen Einfederungsstellung bis zur Niveaulage größer ist als die Federkraft der zweiten Feder 73 oder eines anderen Zughaltemittels, beispielsweise einem Seil.

Bei einer Einfahrbewegung der Luftfeder kommt die Kontaktfläche 19a des Außenrohres auf dem Anschlagdämpfelement 75 des Steuerelements 37 zur Anlage. Folglich kann es zu keinen Geräuschproblemen in Verbindung mit dem Steuerelement kommen, wenn die Luftfeder eine Hublage außerhalb der Niveaulage einnimmt.

An dem Steuerelement ist eine Führungsbahn 39 in Form einer schiefen Ebene ausgeführt. Mit Änderung der Hublage des Steuerelementes 37 gegen die Federkräfte der ersten und zweiten Feder 43; 73 ergibt sich eine Änderung des radialen Stellweges s relativ zum Steuerventil 15, ausgehend von der Führungsbahn auf das Übertragungsglied 69. Eine Rückstellfeder 71 sorgt für einen ständigen Kontakt des Übertragungsglieds 69 auf der Führungsbahn 39 und übt damit eine Stellkraft auf das Steuerventil 15 aus, wenn sich die Kolbenstange 31 der Luftfeder in Ausfahrrichtung bewegt.

Wenn das Steuerelement 37 im Bereich der Führungsbahn 39 als Konus ausgeführt ist, dann ist der Stellweg s für das Übertragungsglied 69 unabhängig von einer durch Vibrationen verursachten Drehbewegung des Steuerelementes 37. Man muss bei einer derartigen Ausgestaltung keinerlei Vorkehrungen für eine in Umfangsrichtung ausgerichtete Einbau- und Betriebsstellung des Steuerelementes 37 zum Steuerventil 15 treffen.

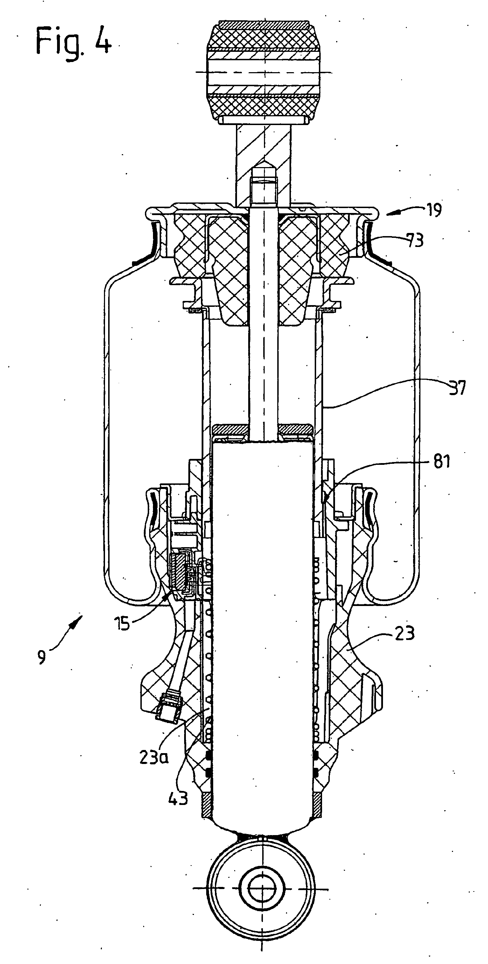

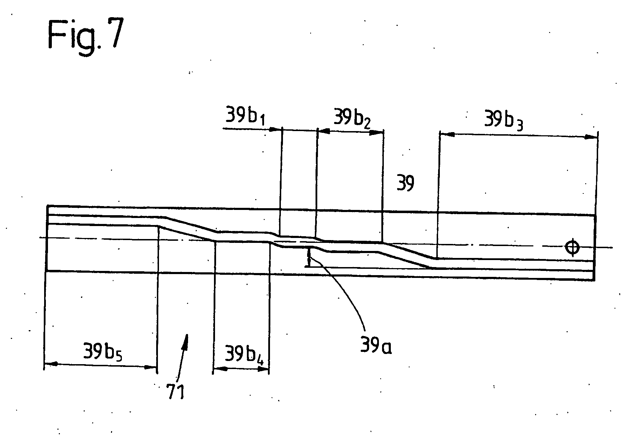

Die Figuren 4 bis 6 zeigen eine Alternativlösung zur Fig. 2 in verschiedenen Hublagen der Luftfeder 9. Der wesentliche Aufbau ist identisch mit der Fig. 2. Abweichend wird ein Steuerventil 15 eingesetzt, das als Drehschieberventil ausgeführt ist und von einem Steuerelement 37 betätigt wird, das eine Führungsbahn 39 aufweist, die in Umfangsrichtung ausgehend von einem Bezugspunkt (Fig. 7) der Führungsbahn 39 radial versetzt ausgeführt ist. Diese Führungsbahn 39 wirkt mit einem Drehschieberventilkörper zusammen, wobei ein radialer Versatz 39a der Führungsbahn 39 über einen Eingriff des Drehschieberventilkörpers mit der Führungsbahn zu einer Drehbewegung führt, wenn die Führungsbahn eine translatorische Relativbewegung ausgehend von der Bezugsstellung ausführt. Bezüglich einer möglichen Ausgestaltung des Drehschieberventils wird auf den Inhalt der DE 44 09 252 A1 verwiesen.

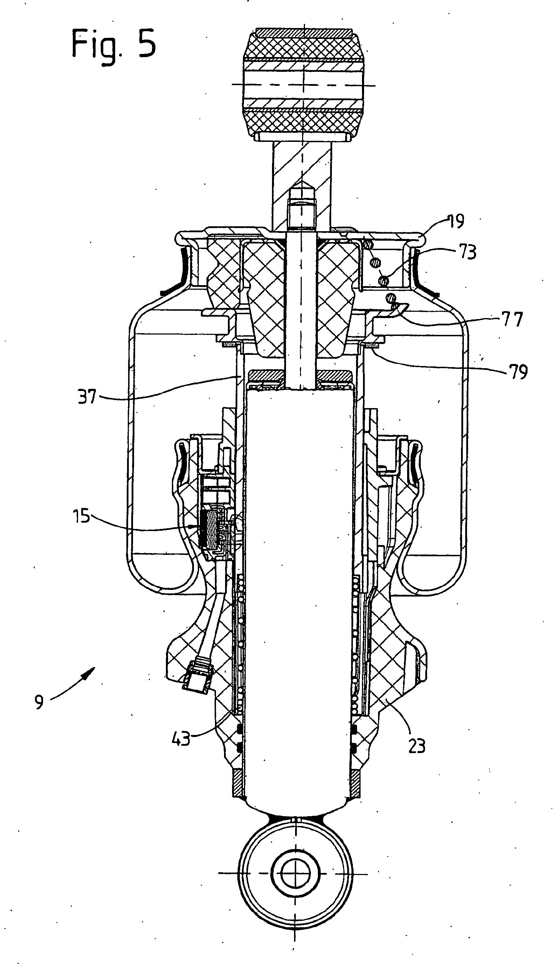

Des weiteren besteht ein Unterschied zu Lösung nach Fig. 2 darin, dass das Steuerelement unabhängig von der momentanen Niveaulage der Luftfeder stets in Kontakt zur Baugruppe Außenrohr 19 steht. Dazu stützt sich die zweite Feder 73 an dem Außenrohr 19 ab, die permanent hubunabhängig von der Luftfeder vorgespannt ist. Es besteht die Möglichkeit, dass die zweite Feder von einem Elastomer gebildet wird. Ohne funktionale Einschränkungen ist jedoch auch die Anwendung einer Schraubenfeder möglich, wobei dafür das Steuerelement mit einem Federteller 77 ausgeführt ist. (s. Fig. 5) Die Federkraft 73 der zweiten Feder ist zumindest ab Erreichen der Niveaulage in Einfederungsrichtung größer als die Federkraft der ersten Feder 43. Damit wird erreicht, dass die gegeneinander gerichteten Federkräfte der Federn 43; 73 keine Fehlstellung des Steuerelements bezogen auf das Außenrohr zulassen. Eine Fehlstellung des Steuerelements bezogen auf das Außenrohr ist derart zu verstehen, dass eine Hublage der Luftfeder kleiner als Niveaulage auch von dem Steuerelement bezogen auf das Steuerventil im Sinne von Zuführen von Luft nachgeführt wird.

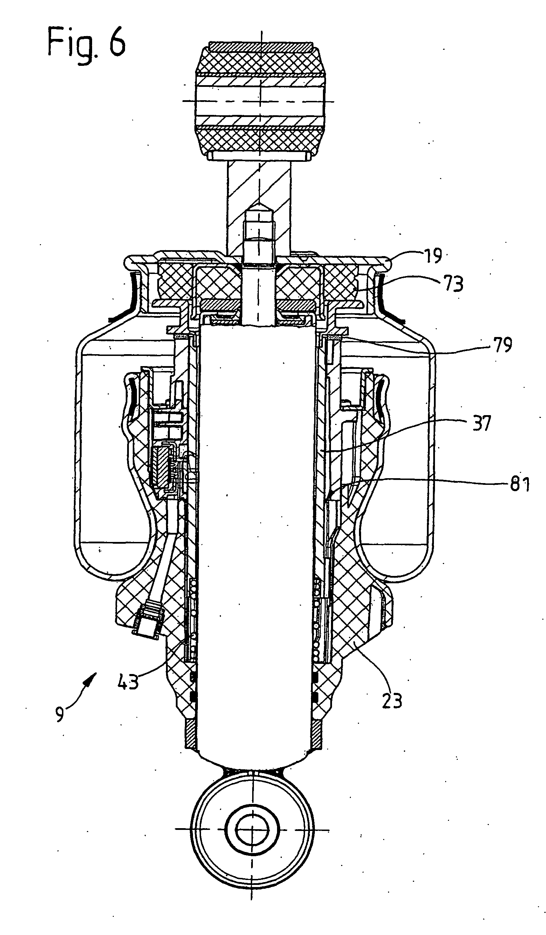

Ausgehend von der Fig. 4 mit der maximalen Ausfederungsposition der Luftfeder und der Fig. 5 mit der angestrebten Niveaulage wird das Steuerelement von dem Außenrohr in Verbindung mit der zweiten Feder 73 gegen die Kraft der ersten Feder 43 in Richtung des Abrollrohres verschoben. Die Fig. 6 zeigt in diesem Zusammenhang die maximale Einfederungsstellung der Luftfeder. Dabei nimmt das Steuerelement eine Endstellung ein, bei der ein funktional zwischen dem Steuerelement 37 und der Baugruppe Abrollrohr 23 angeordneter elastischer Anschlag 79 wirksam wird.

Wie man aus der Zusammenschau der Fig. 4 bis 6 erkennt, kann die Baugruppe Außenrohr 19 ab dem Einsatz des elastischen Anschlags 79 an der Baugruppe Abrollrohr eine axiale Relativbewegung zum Steuerelement 37 ausführen, bei der nur noch die zweite Feder 73 weiter vorgespannt wird. Deshalb kann das Steuerelement bezogen auf die Hublänge der Luftfeder ebenfalls sehr kurz dimensioniert werden.

Insbesondere in der Fig. 4 ist erkennbar, dass das Steuerelement einen Axialanschlag 81 aufweist, der eine Montageendstellung des Steuerelements 37 bestimmt. Bei der Montage wird das Abrollrohr zusammen mit dem Steuerventil 15 und der ersten Feder 43 sowie dem Steuerelement zur Baugruppe Abrollrohr montiert. Die erste Feder drückt dabei das Steuerelement 37 zwangsläufig aus dem Ringraum 23a heraus. Damit die Baueinheit für den weiteren Montageablauf handhabbar ist, bestimmt der Axialanschlag eine Montageendstellung. Im Endmontagezustand, wenn die zweite Feder 73 wirksam wird, ist der Axialanschlag außer Eingriff, da die Federrate und Federweg der zweiten Feder entsprechend zur ersten Feder abgestimmt sind.

Die vorstehend beschriebene Problematik mit der Handhabbarkeit der Baugruppe Abrollrohr bzgl. der Hubbegrenzung des Steuerelements stellt sich bei der Variante nach Fig. 2 nicht unbedingt, da die erste Feder 43 und die zweite Feder 73 jeweils an der Baugruppe Abrollrohr angreifen und damit schon eine Montageendstellung von den beiden Federn 43 und 73 bestimmbar ist.

## Patentansprüche

1. Luftfeder (9) mit mindestens einem innerhalb der Luftfeder angeordneten Steuerventil (15) mit den Steuerstellungen Zuführen, Blockieren- und Abführen von Druckluft, welches über ein ebenfalls innerhalb der Luftfeder angeordnetes Steuerelement (37) angesteuert wird, das an einem der beiden relativ zueinander beweglichen Luftfederbaugruppen Außenrohr- oder Abrollrohr (19,23) angreift, wobei das Steuerelement eine Wirklänge aufweist, die kürzer ist als die Hublänge der Luftfeder und von einer Feder (43) gegen eine der zueinander beweglichen Luftfederbaugruppen vorgespannt ist, wobei das Steuerelement relativ zu den Luftfederbaugruppen schwimmend gelagert ist,
**dadurch gekennzeichnet,**
**dass** eine zweite Feder (73), deren Kraftrichtung gegen die erste Feder (43) wirksam ist, die Stellung des Steuerelements (37) mitbestimmt,

2. Luftfeder nach Anspruch 1,
**dadurch gekennzeichnet,**
**dass** sich die zweite Feder (73) an der Baugruppe Außenrohr (19) abstützt.

3. Luftfeder nach Anspruch 1,
**dadurch gekennzeichnet,**
**dass** die zweite Feder (73) zumindest ab Erreichen der Niveaulage in Einfederungsrichtung der Luftfeder (9) eine größere Federkraft aufweist als die erste Feder (43).

4. Luftfeder nach einem der Ansprüche 1 bis 3,
**dadurch gekennzeichnet,**
**dass** die zweite Feder (73) von einem Elastomer gebildet wird.

5. Luftfeder nach Anspruch 1,
**dadurch gekennzeichnet,**
**dass** das Steuerelement (37) mit einem Federteller (77) für die zweite Feder (73) ausgeführt ist.

6. Luftfeder nach Anspruch einem der Ansprüche 1 bis 5,
**dadurch gekennzeichnet,**
**dass** funktional zwischen dem Steuerelement (37) und der Baugruppe Abrollrohr (23) ein elastischer Anschlag (79) angeordnet ist, der eine Endstellung des Steuerelements (37) bestimmt.

7. Luftfeder nach dem Oberbegriff von Anspruch 1,
**dadurch gekennzeichnet,**
**dass** ein Zughaltemittel eine Endstellung des Steuerelements (37) gegen die Federkraft der ersten Feder (43) bestimmt.

8. Luftfeder nach Anspruch 1,
**dadurch gekennzeichnet,**
**dass** das Zughaltemittel von einer zweiten Feder (73) gebildet wird, die als Zugfeder ausgeführt ist und an der Baugruppe Abrollrohr (23) angreift.

9. Luftfeder nach Anspruch 8,
**dadurch gekennzeichnet,**
**dass** funktional zwischen einer Kontaktfläche (1 9a) der Baugruppe Außenrohr (19) und einer Kontaktfläche (67) des Steuerelements (37) ein Anschlagdämpfelement (75) angeordnet ist.

10. Luftfeder nach Anspruch einem der Ansprüche 1 bis 9,
**dadurch gekennzeichnet,**
**dass** das Steuerelement (37) einen Axialanschlag (81) aufweist, der eine Montageendstellung des Steuerelements (37) bestimmt.

11. Luftfeder nach Anspruch 10,
**dadurch gekennzeichnet,**
**dass** die Federrate und der Federweg der zweiten Feder (73) derart abgestimmt sind, dass im Endmontagezustand der Luftfeder (9) unabhängig von der momentanen Hublage der Axialanschlag (81) außer Eingriff bleibt.

## Claims

1. Air spring (9) having at least one control valve (15) which is arranged inside the air spring, has the control positions supply, blocking and discharge of compressed air and is actuated via a control element (37) which is likewise arranged inside the air spring and acts on one of the two air-spring assemblies outer tube or rolling tube (19, 23) which can move relative to one another, the control element having an active length which is shorter than the stroke length of the air spring and being prestressed by a spring (43) against one of the air-spring assemblies which can move with respect to one another, the control element being mounted in a floating manner relative to the air-spring assemblies, **characterized in that** a second spring (73), the force direction of which acts counter to the first spring (43), codetermines the position of the control element (37).

2. Air spring according to Claim 1, **characterized in that** the second spring (73) is supported on the assembly outer tube (19).

3. Air spring according to Claim 1, **characterized in that** the second spring (73) has a greater spring force than the first spring (43), at least once the level position in the compression direction of the air spring (9) has been reached.

4. Air spring according to one of Claims 1 to 3, **characterized in that** the second spring (73) is formed from an elastomer.

5. Air spring according to Claim 1, **characterized in that** the control element (37) is configured with a spring collar (77) for the second spring (73).

6. Air spring according to one of Claims 1 to 5, **characterized in that** an elastic stop (79) which defines an end position of the control element (37) is arranged functionally between the control element (37) and the assembly rolling tube (23).

7. Air spring according to the precharacterizing clause of Claim 1, **characterized in that** a tensile holding means defines an end position of the control element (37) counter to the spring force of the first spring (43).

8. Air spring according to Claim 1, **characterized in that** the tensile holding means is formed by a second spring (73) which is configured as a tension spring and acts on the assembly rolling tube (23).

9. Air spring according to Claim 8, **characterized in that** a stop damping element (75) is arranged functionally between a contact face (19a) of the assembly outer tube (19) and a contact face (67) of the control element (37).

10. Air spring according to one of Claims 1 to 9, **characterized in that** the control element (37) has an axial stop (81) which defines a mounting end position of the control element (37).

11. Air spring according to Claim 10, **characterized in that** the spring rate and the spring travel of the second spring (73) are adapted in such a way that the axial stop (81) remains disengaged in the final mounted state of the air spring (9), irrespectively of the instantaneous stroke position.

## Revendications

1. Amortisseur pneumatique (9) doté d'au moins une soupape pilote (15) qui est disposée à l'intérieur de l'amortisseur pneumatique, qui présente les positions pilotes d'amenée, de blocage et d'évacuation d'air comprimé et qui est pilotée par un élément pilote (37) également disposé à l'intérieur de l'amortisseur pneumatique et qui s'engage sur un des deux modules mobiles l'un par rapport à l'autre de l'amortisseur pneumatique que sont le tube extérieur et le tube de déroulement (19, 23), l'élément pilote ayant une longueur active plus courte que la longueur de la course de l'amortisseur pneumatique et étant précontraint par un ressort (43) contre un des deux modules mobiles l'un par rapport à l'autre de l'amortisseur pneumatique, l'élément pilote étant monté de manière flottante par rapport aux modules de l'amortisseur pneumatique, **caractérisé en ce qu'**un deuxième ressort (73) dont l'effet est dirigé contre le premier ressort (43) participe à définir la position de l'élément pilote (37).

2. Amortisseur pneumatique selon la revendication 1, **caractérisé en ce que** le deuxième ressort (73) s'appuie sur le module formé du tube extérieur (19).

3. Amortisseur pneumatique selon la revendication 1, **caractérisé en ce que** le deuxième ressort (73) a une force élastique supérieure à celle du premier ressort (43) au moins à partir de l'atteinte du niveau dans la direction d'amortissement de l'amortisseur pneumatique (9).

4. Amortisseur pneumatique selon l'une des revendications 1 à 3, **caractérisé en ce que** le deuxième ressort (73) est formé d'un élastomère.

5. Amortisseur pneumatique selon la revendication 1, **caractérisé en ce que** l'élément pilote (37) est réalisé avec un plateau de ressort (77) pour le deuxième ressort (73).

6. Amortisseur pneumatique selon l'une des revendications 1 à 5, **caractérisé en ce qu'**une butée élastique (79) qui définit la position d'extrémité de l'élément pilote (37) est disposée fonctionnellement entre l'élément pilote (37) et le module formé du tube déroulant (23).

7. Amortisseur pneumatique selon le préambule de la revendication 1, **caractérisé en ce qu'**un moyen de maintien en traction définit une position d'extrémité de l'élément pilote (37) en opposition à la force élastique du premier ressort (43).

8. Amortisseur pneumatique selon la revendication 1, **caractérisé en ce que** le moyen de maintien en traction est formé d'un deuxième ressort (73) configuré comme ressort de traction et s'engage sur le module formé du tube déroulant (23).

9. Amortisseur pneumatique selon la revendication 8, **caractérisé en ce qu'**un élément (75) d'amortissement de butée est disposé fonctionnellement entre une surface de contact (19a) du module formé du tube extérieur (19) et une surface de contact (67) de l'élément pilote (37).

10. Amortisseur pneumatique selon l'une des revendications 1 à 9, **caractérisé en ce que** l'élément pilote (37) présente une butée axiale (81) qui définit la position d'extrémité de montage de l'élément pilote (37).

11. Amortisseur pneumatique selon la revendication 10, **caractérisé en ce que** la constante élastique et le parcours élastique du deuxième ressort (73) sont accordés l'un à l'autre de telle sorte que lorsque l'amortisseur pneumatique (9) est en position de montage final, la butée axiale (81) est désengagée quelle que soit la position instantanée dans sa course.
